# EUROPÄISCHE PATENTANMELDUNG

(11) **EP 0 741 283 A1**
(43) Veröffentlichungstag der Anmeldung: **06.11.1996**
(21) Anmeldenummer: 96105823.7
(22) Anmeldetag: 13.04.1996
(51) Int. Cl.: G01F 1/66

(54) **Ultraschall-Messwertgeber zur Bestimmung der Durchflussmenge einer strömenden Flüssigkeit**

(30) Priorität: 03.05.1995 EP 95810286
(71) Anmelder: Landis & Gyr Technology Innovation AG, 6301 Zug (CH)
(72) Erfinder: Adam, Norbert, 63450 Hanau (DE); Stegheus, Michael, 60599 Frankfurt (DE); Schupp, Horst, 64347 Griesheim (DE); Hauenstein, Günther, 63477 Maintal (DE)

(57) **Zusammenfassung**

Ein Messwertgeber (1) zur Bestimmung der Durchflussmenge der durch ein Rohrsystem strömenden Flüssigkeit mit Hilfe von Ultraschallsignalen enthält ein von der Flüssigkeit durchströmtes Messrohr (4). Den Enden des Messrohres (4) gegenüberliegend ist je ein Ultraschallwandler (9, 10) angeordnet. Der Durchmesser der von den Ultraschallwandlern (9, 10) abgegebenen Schallkeulen ist kleiner als der Innendurchmesser (d) des Messrohres (4). Im Einlassstutzen (2) ist eine Blende (5) eingebaut zur Erzeugung eines von der Art der äusseren Verrohrung weitgehend unabhängigen Strömungsprofils im Messrohr (4). Bevorzugt weisen die Enden des Messrohres (4) Elemente (6, 7) auf, die das Strömungsprofil der Flüssigkeit im Messrohr (4) beeinflussen, wobei die Elemente (6, 7) unterschiedlich grosse Strömungskammern (20) mit einem für die Flüssigkeit unterschiedlich grossen Strömungswiderstand bilden. Die Strömungskammern (20) sind so angeordnet, dass in der ohne Elemente (6, 7) bevorzugt angeströmten Zone der Strömungswiderstand erhöht und in den Zonen mit ansonsten geringerer Strömung vermindert ist.

## Beschreibung

Die Erfindung betrifft einen Ultraschall-Messwertgeber zur Bestimmung der Durchflussmenge einer strömenden Flüssigkeit der im Oberbegriff des Anspruchs 1 genannten Art.

Solche Messwertgeber eignen sich beispielsweise zur Erfassung von Strömungsgeschwindigkeiten und darauf aufbauend zur Erfassung von Durchflussmengen und in Kombination mit Temperaturdifferenzmessungen zur Wärmeverbrauchserfassung und -verrechnung.

Ein Ultraschall-Messwertgeber der im Oberbegriff des Anspruchs 1 genannten Art ist bekannt aus der US-amerikanischen Patentschrift 4 140 012. Der Messwertgeber weist einen Einlass- und einen Auslassstutzen für die Flüssigkeit, zwei Ultraschallwandler und ein Messrohr auf. Ein- und Auslassstutzen sind entlang einer gemeinsamen Achse, das Messrohr ist quer zu dieser Achse angeordnet. Die Ultraschallwandler weisen eine schallabstrahlende Oberfläche auf, die wesentlich kleiner als die Querschnittsfläche des Messrohres sein kann, so dass nur ein begrenztes Volumen des Messrohres mit Ultraschall beschallt wird. Änderungen des Strömungsprofils in Abhängigkeit der Strömungsgeschwindigkeit der Flüssigkeit oder der Temperatur führen somit zu Messfehlern. Variationen des Strömungsprofils treten insbesondere auch dadurch auf, dass die Verrohrung der Zu- und Ableitung der Flüssigkeit vor bzw. nach dem Messwertgeber von Fall zu Fall unterschiedlich sein kann. Aus diesem Grund ist der Messfehler des Messwertgebers abhängig von der Art des Einbaus in ein bestehendes Leitungssystem und kann durch eine Eichung im Werk nicht eliminiert werden.

Aus der europäischen Patentschrift 565 851 ist ein zweiter Typ von Messwertgebern bekannt, bei dem das Messrohr parallel zur Ein-/Auslassachse angeordnet ist. Die Enden des Messrohres sind mit drallfreie Turbulenzen erzeugenden Elementen ausgerüstet, die die Genauigkeit des Messwertgebers im Kleinlastbereich verbessern. Diese Elemente, die als stegartige Verlängerungen der Rohrwand des Messrohres ausgebildet sind, können zudem federbeinartige Verlängerungen aufweisen, die unmittelbar auf der Oberfläche der Messwandler aufliegen. Auf diese Weise wird eine vorbestimmte Vakuumfestigkeit erzielt.

Aus der schweizerischen Patentschrift 648 932 ist es ebenfalls bekannt, das Strömungsprofil im Messrohr durch bei den Enden des Messrohres angebrachte Öffnungen oder Schlitze oder an der Aussenwand des Messrohres angebrachte Zapfen zu beeinflussen.

Der Erfindung liegt die Aufgabe zugrunde, einen Messwertgeber für relativ grosse Durchflussraten vorzuschlagen, dessen Messgenauigkeit möglichst unempfindlich gegenüber der Verrohrung vor dem Einlass- und nach dem Auslassstutzen ist, dessen Strömungsprofil möglichst unabhängig von der Strömungsgeschwindigkeit bzw. Durchflussrate ist und bei dem das Auftreten von Temperaturschichtungen im Zufluss die Messgenauigkeit nicht beeinträchtigt.

Die Erfindung ist in den Ansprüchen 1 und 5 gekennzeichnet. Weiterbildungen der Erfindung ergeben sich aus den abhängigen Ansprüchen.

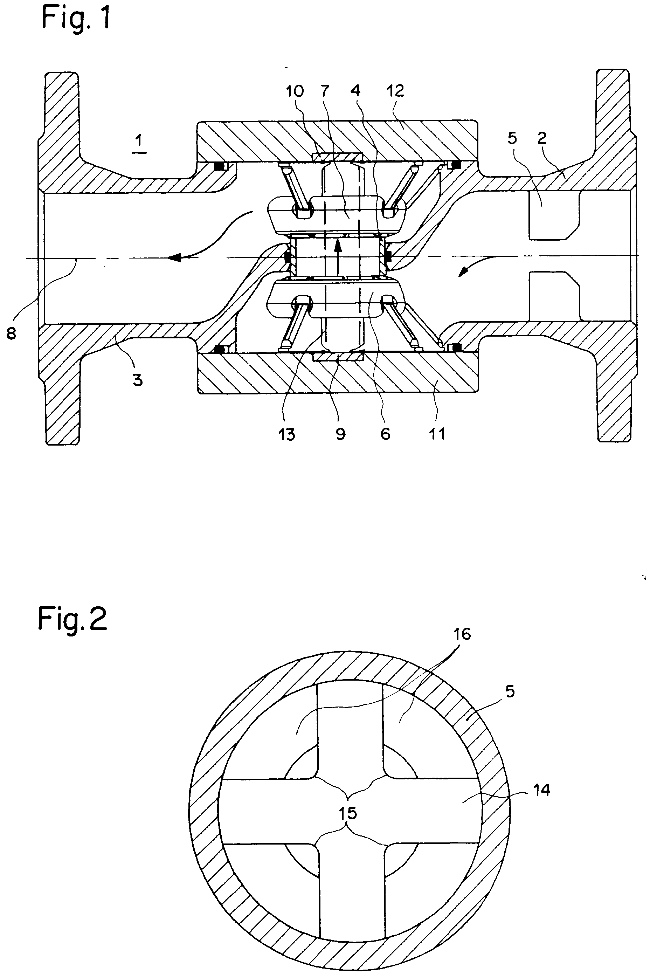

Nachfolgend wird ein Ausführungsbeispiel der Erfindung anhand der Zeichnung näher erläutert.
- Es zeigen:: Fig. 1 einen Messwertgeber mit drei Strömungshindernissen,
Fig. 2 das erste Strömungshindernis in der Draufsicht,
Fig. 3 das zweite Strömungshindernis in perspektivischer Darstellung, und
Fig. 4 das zweite Strömungshindernis in der Draufsicht.

Die Fig. 1 zeigt schematisch einen Messwertgeber 1 zur Bestimmung der Durchflussmenge einer strömenden Flüssigkeit mit einem Einlassstutzen 2, einem Auslassstutzen 3, einem Messrohr 4, einer als Strömungshindernis wirkenden Blende 5 im Einlassstutzen 2 und weiteren als Strömungshindernissen wirkenden Elementen 6 und 7, die an den Enden des Messrohres 4 angeordnet sind. Ein- und Auslassstutzen 2, 3 definieren eine Messwertgeberachse 8. Das Messrohr 4 ist senkrecht zur Messwertgeberachse 8 angeordnet. Die Fliessrichtung der Flüssigkeit ist mit Pfeilen angedeutet. Gegenüber den Enden des Messrohres 4 sind als Messwandler dienende Ultraschallwandler 9 und 10 angeordnet, die mit der Flüssigkeit in mittelbarem Kontakt sind. Das Gehäuse des Messwertgebers 1 ist aus einem Gussstück gebildet, das im Bereich der Ultraschallwandler 9 und 10 Öffnungen aufweist. Die Ultraschallwandler 9 und 10 sind in Abdeckplatten 11 bzw. 12 eingebaut, mit welchen die Öffnungen wasserdicht verschlossen sind. Die Ultraschallwandler 9 und 10 beschallen das Innere des Messrohres 4 mit einer Schallkeule, deren senkrecht zur Ausbreitungsrichtung gemessener Durchmesser kleiner als der Innendurchmesser d des Messrohres 4 ist. Die vom Ultraschallwandler 9 abgestrahlte Schallkeule 13 ist mit einer gestrichelten Linie dargestellt. Somit wird bei der Messung der Durchflussmenge nur ein Teilvolumen im Messrohr 4 erfasst. Jede Änderung des Strömungsprofils im Messrohr 4 führt damit zu Messfehlern.

Die Fig. 2 zeigt die Blende 5 im Einlassstutzen 2 (Fig. 1) in der Draufsicht in Fliessrichtung des Wassers. Die Blende 5 ist mit einer kreuzförmigen Öffnung 14 ausgebildet. Aufder der Öffnung des Einlassstutzens 2 zugewandten Seite sind die vier inneren Ecken 15 des Kreuzes, wie auch in der Fig. 1 deutlich ersichtlich ist, sphärisch abgetragen. Die Blende 5 wirkt als Strömungsrichter, so dass eine von aussen auf den Messwertgeber 1 auftreffende inhomogene und nicht kontrollierbare Strömungsverteilung auf ein immer gleiches Strömungsprofil im Messrohr 4 gleichgerichtet wird. Dank der Blende 5 herrscht nämlich bereits im Einlassstutzen 2 im Bereich zwischen der Blende 5 und dem Messrohr 4 ein durch die Blende 5 bestimmtes Strömungsprofil, das unabhängig von der auf die Blende 5 auftreffenden Strömungsverteilung ist. Der Einfluss der äusseren Verrohrung auf das Strömungsprofil im Messrohr 4 ist somit weitgehend eliminiert. Die Messgenauigkeit hängt weder davon ab, ob sich unmittelbar vor dem Einlassstutzen 2 oder nach dem Auslassstutzen 3 ein gerades oder ein gebogenes Rohrstück befindet, noch davon, ob der Messwertgeber 1 in ein Rohrsystem eingebaut ist, dessen Rohre einen vom Einlass- und Auslassstutzen 2 bzw. 3 unterschiedlichen Durchmesser aufweisen. Damit kann auf Einbauvorschriften für Beruhigungsstrecken vor dem Messwertgeber 1 verzichtet werden.

Die kreuzförmige Öffnung 14 kann, muss jedoch nicht auf die Messrohrachse ausgerichtet sein. Das Verhältnis der Fläche der kreuzförmigen Öffnung 14 zu der das eigentliche Strömungshindernis darstellenden Fläche 16, wie auch der Grad der sphärischen Abtragung bestimmen einerseits den Druckabfall über der Blende 5 und beeinflussen andererseits die Messgenauigkeit des Messwertgebers 1. Bevorzugt ist die Blende 5 so konstruiert, dass der Druckabfall über dem Messwertgeber 1 bei Nenndurchfluss weniger als 250 mbar beträgt.

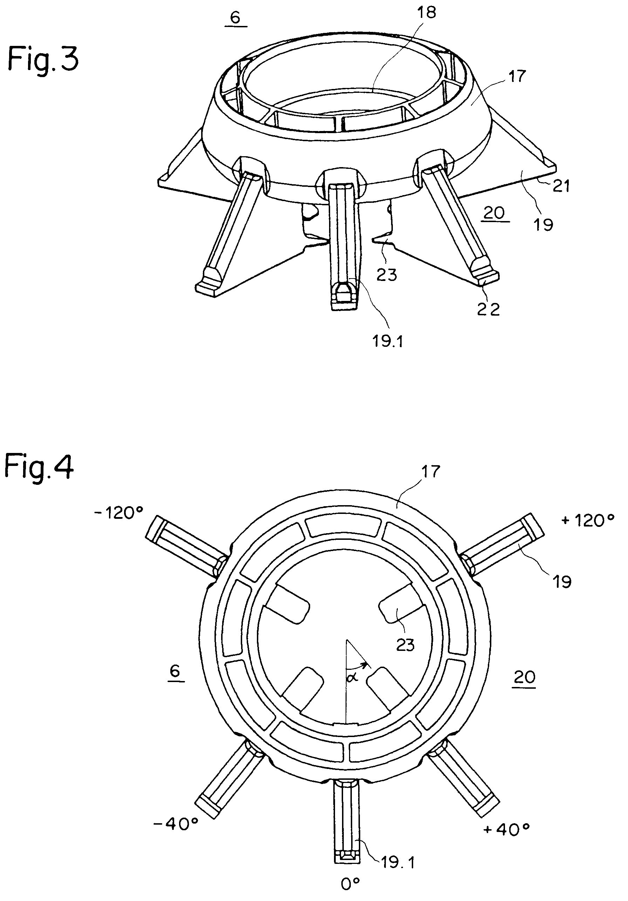

Die Fig. 3 zeigt in perspektivischer Darstellung das Element 6. Es weist einen ringförmigen Körper 17 auf, der auf das Ende des Messrohres 4 (Fig. 1) aufsteckbar ist. Dabei schlägt das Messrohr 4 an einem Ansatz 18 an. Am Körper 17 sind fünf Flügel 19 angebracht, die radial zur Achse des Messrohres 4 gerichtet sind. Zwischen den Flügeln 19 sind Strömungskammern 20 gebildet, durch die der Grossteil der Flüssigkeit hindurchströmen muss. Die Stirnflächen 21 der Flügel 19 sind gratfrei und die stirnseitigen Kanten mit einem Radius von wenigstens 0.5 mm ausgebildet. Die Flügel 19 sind entlang der Peripherie des Körpers 17 in unterschiedlichen Winkelabständen angeordnet, so dass die durch die Flügel 19 gebildeten Strömungskammern 20 unterschiedlich gross sind und für die Flüssigkeit einen unterschiedlich grossen Strömungswiderstand darstellen. Die Flügel 19 weisen einen Ansatz 22 auf, der, wie in der Fig. 1 dargestellt, in eine dazu vorgesehene Aussparung zwischen dem Einlassstutzen 2 und der dazugehörigen Abdeckplatte 11 eingreift. Auf diese Weise ist das Element 6 und analog das Element 7 im Gehäuse des Messwertgeber 1 unverrückbar gehalten. Weiter ist das Messrohr 4 zugleich axial gelagert. Dessen Lagerung ist damit relativ unempfindlich gegen hydraulische Druckstösse im Rohrsystem. Weiter weisen die Flügel 19 federbeinartige Formteile 23 auf, die sich, wie in der Fig. 1 ersichtlich ist, auf der Oberfläche der Ultraschallwandler 9 bzw. 10 abstützen. Damit ist eine vorbestimmte Vakuumfestigkeit der Ultraschallwandler 9 bzw. 10 erzielbar, d.h. dass bei Unterdruck im Rohrsystem die Ultraschallwandler 8, 9 nicht mechanisch beschädigt werden. Die Elemente 6, 7 bestehen vorzugsweise aus einem spanlos verformbaren Kunststoff.

Die Lage jedes der Flügel 19 ist gemäss Fig. 4 durch einen Winkel α beschreibbar, wobei die Richtung mit dem Winkel α = 0° als Nullage parallel zur Messwertgeberachse 8 ausgerichtet ist und gegen den Einlassstutzen 2 weist. Diese Nullage nimmt der mittlere Flügel 19.1 der in der Fig. 3 gezeichneten fünf Flügel 19 des Elementes 6 ein. Auf der Einlassseite des Messrohrs 4 ist dieser mittlere Flügel 19.1 direkt angeströmt. Die unterschiedliche Weite der Strömungskammern 20 bewirkt, dass trotz der unterschiedlichen Weglängen die Strömung gleichmässig auf den Umfang des Messrohres 4 verteilt wird und dieses gleichmässig durchströmt. Die anderen vier Flügel 19 sind bei Winkeln α = - 120°, - 40°, +40° und +120° angeordnet. Die Aufteilung mittels fünf Flügeln 19 und den angegebenen Winkeln ist nur als eine der möglichen Ausführungsformen anzusehen. Grösstmögliche Wirksamkeit bezüglich eines homogenen Strömungsprofils im Messrohr 4 und minimaler Druckabfall über den Elementen 6, 7 bildete das Auswahlkriterium für Anzahl und Lage der Flügel 19.

Der Körper 17 ist auf der dem Messrohr 4 abgewandten Seite aus strömungstechnischen Gründen wulstartig ausgebildet. Das Element 7 ist von der gleichen Art wie das Element 6. Die einander entsprechenden Flügel 19 der beiden Elemente 6 und 7 können, wie in der Fig. 1 gezeichnet, bezogen auf die Messrohrachse in der gleichen Radialstellung liegen oder in einer variablen Winkelstellung zueinander angeordnet sein.

Wegen der unregelmässigen Anordnung der Flügel 19 des Elementes 6 ergibt sich über dem Eingang des Messrohres 4 ein ortsabhängiger Strömungswiderstand. Über dem Ausgang des Messrohres 4 ergibt sich ebenfalls ein ortsabhängiger Strömungswiderstand. Die Winkelstellung der Elemente 6 und 7 ist so festgelegt, dass in der ohne Element bevorzugt angeströmten Zone der Strömungswiderstand erhöht und in den Zonen mit ansonsten geringerer Strömung vermindert wird. Mittels der Elemente 6 und 7 ist die Ausbildung eines bevorzugten Strömungskanals innerhalb des Messrohres 4 demnach so erschwert, dass das beschallte Teilvolumen im Messrohr 4 repräsentativ für die ganze Durchflussmenge ist. Die auf ein Teilvolumen begrenzte Beschallung der Flüssigkeit im Messrohr 4 ist somit nicht mehr automatisch mit grösseren Messfehlern verbunden. Zudem bewirken sowohl die Blende 5 wie auch die Elemente 6 und 7 eine Verwirbelung der Flüssigkeit und verhindern dadurch die Ausbildung von Temperaturgradienten im Messrohr 4, was der Messgenauigkeit ebenfalls zugute kommt.

Es ist auch möglich, eine weitere Blende wie die Blende 5 im Auslassstutzen 3 einzubauen, wobei die abgerundete Seite der vier Ecken des Kreuzes der Öffnung des Auslassstutzens 3 zugewandt ist. Diese Ausführung gestattet einen Einbau des Messwertgebers 1, wobei jeder der Stutzen 2 oder 3 als Ein- oder Auslassstutzen dienen kann und wobei positiv zu zählende Durchflussmengen am Messwertgeber 1 nach der Installation vorzugsweise elektronisch bei einem hier nicht gezeigten Auswertegerät festzulegen sind.

## Patentansprüche

1. Messwertgeber (1) zur Bestimmung der Durchflussmenge einer durch ein Rohrsystem strömenden Flüssigkeit durch Messung der mittleren Durchflussgeschwindigkeit mit Hilfe von Ultraschallsignalen, bei dem die Flüssigkeit durch ein Messrohr (4) strömt, dessen Enden gegenüberliegend beidseitig je ein mit der Flüssigkeit in mittelbarer Berührung stehender Ultraschallwandler (9, 10) angeordnet ist, wobei der Durchmesser der von den Ultraschallwandlern (9, 10) abgegebenen Schallkeule (13) kleiner als der Innendurchmesser (d) des Messrohres (4) ist, **dadurch gekennzeichnet,** **dass** im Einlassstutzen (2) eine Blende (5) eingebaut ist zur Erzeugring eines von der Art der äusseren Verrohrung weitgehend unabhängigen Strömungsprofils im Messrohr (4).

2. Messwertgeber nach Anspruch 1, **dadurch gekennzeichnet, dass** die Blende (5) mit einer kreuzförmigen Öffnung (14) ausgebildet ist.

3. Messwertgeber nach Anspruch 2, **dadurch gekennzeichnet, dass** die vier zentralen Ecken (15) der kreuzförmig ausgebildeten Öffnung (14) auf der der Öffnung des Einlassstutzens (2) zugewandten Seite abgerundet sind.

4. Messwertgeber nach einem der Ansprüche 1 bis 3, **dadurch gekennzeichnet, dass** auch im Auslassstutzen (3) eine Blende eingebaut ist.

5. Messwertgeber (1) zur Bestimmung der Durchflussmenge einer durch ein Rohrsystem strömenden Flüssigkeit durch Messung der mittleren Durchflussgeschwindigkeit mit Hilfe von Ultraschallsignalen, bei dem die Flüssigkeit durch ein Messrohr (4) strömt, dessen Enden gegenüberliegend beidseitig je ein mit der Flüssigkeit in mittelbarer Berührung stehender Ultraschallwandler (9, 10) angeordnet ist, wobei der Durchmesser der von den Ultraschallwandlern (9, 10) abgegebenen Schallkeule (13) kleiner als der Innendurchmesser (d) des Messrohres (4) ist, **dadurch gekennzeichnet, dass** mindestens eines der Enden des Messrohres (4) das Strömungsprofil der Flüssigkeit im Messrohr (4) beeinflussende Elemente (6, 7) aufweist, wobei diese Elemente (6, 7) unterschiedlich grosse Strömungskammern (20) mit einem für die Flüssigkeit unterschiedlich grossen Strömungswiderstand bilden und wobei die Strömungskammern (20) so angeordnet sind, dass in der ohne Element (6, 7) bevorzugt angeströmten Zone der Strömungswiderstand erhöht und in den Zonen mit ansonsten geringerer Strömung vermindert ist.

6. Messwertgeber nach Anspruch 5, **dadurch gekennzeichnet, dass** die Elemente (6, 7) radial zur Achse des Messrohres (4) gerichtete Flügel (19) aufweisen, wobei die Strömungskammern (20) durch die Zwischenräume zwischen den Flügeln (19) gebildet sind.

7. Messwertgeber nach Anspruch 5 oder 6, **dadurch gekennzeichnet, dass** die Flügel (19) federbeinartige Formteile (23) aufweisen, die sich auf der Oberfläche der Ultraschallwandler (9, 10) abstützen.

8. Messwertgeber nach einem der Ansprüche 5 bis 7, **dadurch gekennzeichnet, dass** die Flügel (19) einen Ansatz (22) aufweisen, der in eine Aussparung des Gehäuses eingreift.

9. Messwertgeber nach einem der Ansprüche 5 bis 8, **dadurch gekennzeichnet, dass** die Elemente (6, 7) aus einem Körper (17) mit fünf Flügeln (19, 19.1) bestehen, wobei der Körper (17) auf das Ende des Messrohres (4) aufsteckbar ist und wobei die Flügel (19, 19.1) bei Winkeln α von -120°, -40°, 0°, +40° und +120° angeordnet sind.

10. Messwertgeber nach Anspruch 9, **dadurch gekennzeichnet, dass** der Winkel α = 0° einer Richtung entspricht, die parallel zu einer durch Einlassstutzen (2) und Auslassstutzen (3) definierten Messwertgeberachse (8) liegt.
